# EUROPEAN PATENT APPLICATION

(11) **EP 0 524 157 A1**
(43) Date of publication of application: **20.01.1993**
(21) Application number: 92830375.9
(22) Date of filing: 14.07.1992
(51) Int. Cl.: B60K 23/08

(54) **A vehicle with permanent four-wheel drive**

(30) Priority: 18.07.1991 IT TO910571
(71) Applicant: FIAT AUTO S.p.A., I-10135 Torino (IT)
(72) Inventor: Falzoni, Gian Luigi, I-10141 Torino (IT)
(74) Representative: Quinterno, Giuseppe

(57) **Abstract**

A four-wheel drive vehicle in which the transmission of the driving torque to the rear wheels (3) is controlled via a friction clutch (7) with which is associated an electric motor (23) controlled by an electronic control unit (24) as a function of operating conditions of the vehicle detected by a series of sensors (25, 26, 27, 28, 29).

## Description

The present invention relates to vehicles having permanent four-wheel drive and having an engine, a steering system, a first unit for transmitting the driving torque to the front wheels and a second unit for transmitting the driving torque to the rear wheels connected to the first transmission unit by a friction clutch.

The object of the invention is to provide a vehicle of the above-defined type in which it is possible to graduate the amount of torque transferred to the rear wheels by appropriately controlling the friction clutch and, if necessary (for example, during the vehicle braking phase), disengaging the friction clutch to cancel the drive to the rear wheels, this all being performed automatically and by methods which make it possible to optimise the driving characteristics of the vehicle.

According to the invention, this object is achieved in that operatively associated with the friction clutch are operating means comprising an electric motor, sensor means associated with the engine, the steering system and the input and output of the friction clutch, for detecting operative conditions of the vehicle, and an electronic control unit the input of which is connected to the sensor means and the output of which is connected to the electric motor in order to control its activation in one sense to apply a load to the friction clutch or in the opposite sense to remove the load from the friction clutch in order, at the limit, to cause its disengagement and thus to cancel the friction of the rear wheels, as a function of the operative conditions detected by the aforesaid sensor means.

By virtue of this solution, the friction clutch is electrically operated with no need to have recourse to fluid actuators, the intervention means being optimal in that they are automatically correlated with the effective conditions of operation of the vehicle. This makes it possible to have a virtually neutral behaviour of the vehicle under any road conditions, allowing the driver easily to have the vehicle under control in any driving situation.

The electric motor may be applied directly to the linkage which operates the friction clutch or it may be arranged remotely to operate the clutch through a system of levers, a flexible cable or hydraulic transmission or any equivalent systems. In the first case, the electric motor is arranged to control the translatory movement in one direction or the other of a rod for controlling, through a rocker lever, a sleeve which is slidable to apply a load to or to remove the load from the friction clutch.

The invention will now be described in detail with reference to the appended drawings which are supplied purely by way of non-limitative example and in which:

Figure 1 shows diagrammatically in plan view a permanent four-wheel drive vehicle according to the invention.

Figure 2 is a longitudinal section on an enlarged scale showing the friction clutch assembly and

Figure 3 is a sectional view taken on the line III-III in Figure 2.

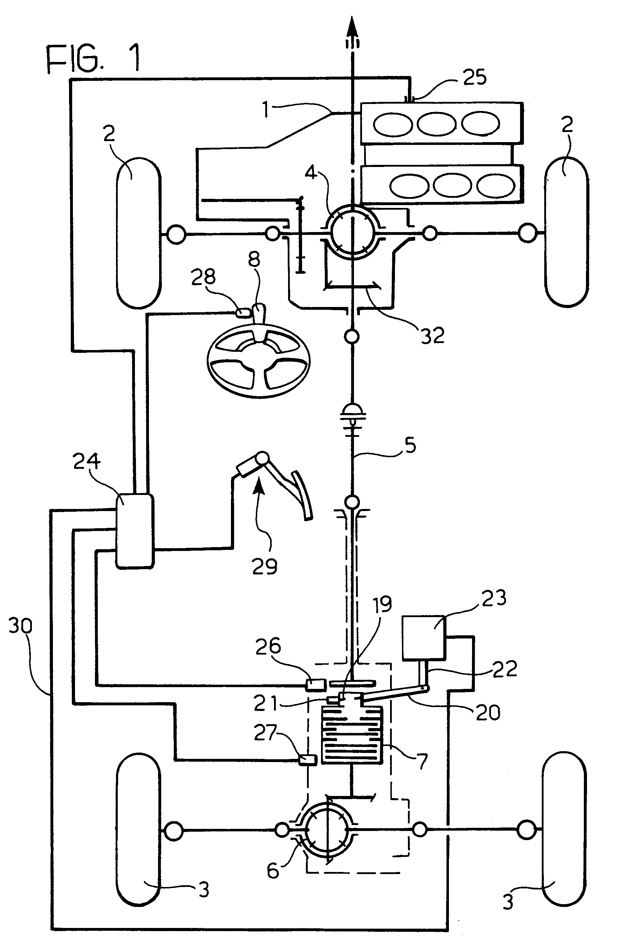

Figure 1 schematically shows the essential components of the transmission between the heat engine/gear-box assembly 1 and the front wheels 2 and rear wheels 3 of a motor vehicle. The output from the engine/gear-box assembly 1 conventionally drives a front differential 4 to transfer driving torque to the front wheels 2 and, through a pair of bevel gears 32,a transmission shaft 5 and a friction clutch 7 which is normally engaged, a rear differential 6 for the transfer of driving torque to the rear wheels 3.

The front wheels 2 are steered through a conventional steering system of which the single steering shaft 8 is partially shown in Figure 1.

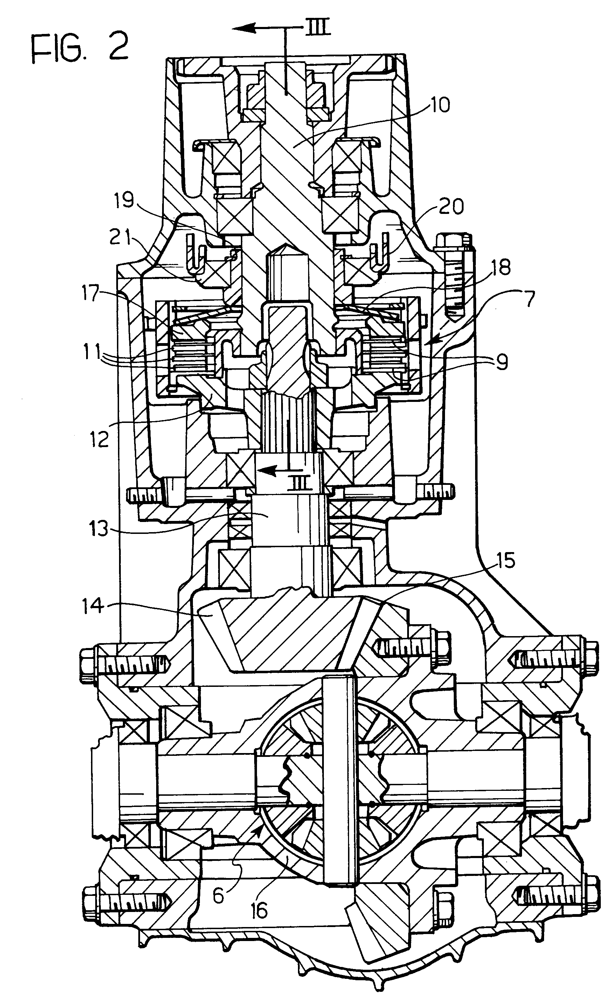

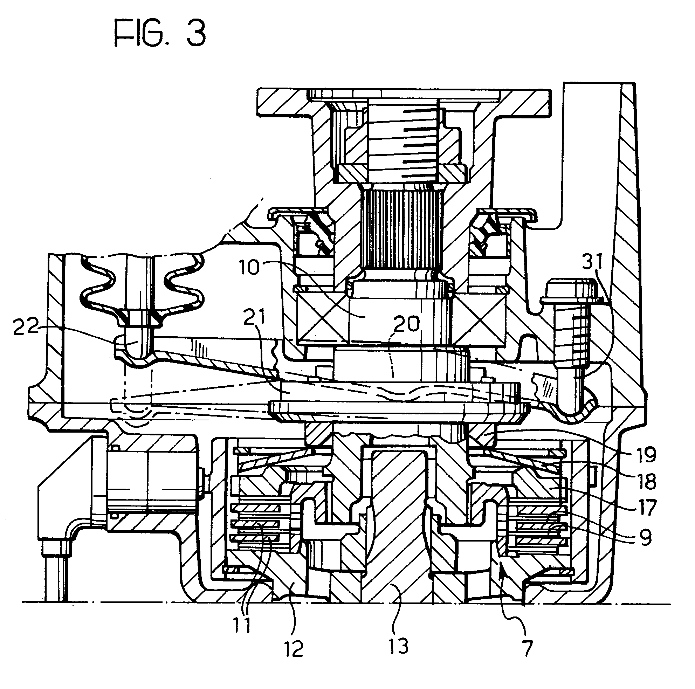

Referring in greater detail to Figures 2 and 3, the friction clutch 7 is also of a generally conventional type and briefly comprises a series of driving discs 9 fast for rotation with a tang 10 coupled to the transmission shaft 5 and a series of driven discs 11 coupled through a hub 12 to a shaft 13 coaxial with the tang 10 and carrying a bevelled toothed pinion 14 which meshes with a toothed ring 15 rigid with the housing 16 of the rear differential 6.

In order to clamp the driving discs 9 and the driven discs 11 together and apply a load between them, a sliding sleeve 17 is provided which is operated through a resilient member 18 by a sleeve 19 adapted to slide axially along the tang 10.

Figures 2 and 3 show the disengaged condition of the friction clutch 7 corresponding to withdrawal of the sleeve 19. The forward movement of the latter to apply a load to the friction clutch 7, and thus transferring torque to the rear wheels 3, is achieved by a forked rocker lever 20 mounted on the sleeve 19 through an interposed rolling bearing 21. The rocker lever 20 has one end pivoted on a stationary articulation member 31 and bears at the opposite end, under the action of the resilient member 18, against an axially displaceable actuating rod 22. Axial displacement of the rod 22 is performed by an electric motor schematically shown as 23 in Figure 1. The motor, which may also possibly be provided with a system for balancing the operating load acts directly on the rod 22 through a worm/worm wheel coupling (not shown) or some similar system of reversible or irreversible type.

As an alternative to the direct method of actuation, the electric motor 23 may actuate the control rod 22 remotely through an intermediate transmission with a system of levers, or a flexible cable or hydraulic operating means, or by any equivalent system.

Actuation of the electric motor 23 (and hence variations in the load on the friction clutch 7) is effected and controlled by an electronic microprocessor control unit 24 in response to the operative parameters of the vehicle. The said operative parameters are detailed by a series of sensors predisposed to provide corresponding electrical input signals to the unit 24. In the case of the example illustrated, there are provided sensors 25 and 29 for sensing the number of revolutions and the position of the accelerator pedal of the heat engine 1 (or similar parameters indicative of the engine output), a sensor for sensing the revolutions 26 of the transmission shaft 5 at the input of the friction clutch 7, a sensor 27 for sensing the number of revolutions of the shaft 13 at the output from the friction clutch 7 (which may possibly be replaced by a pair of sensors directly associated with the rear wheels 3), and a steering-angle sensor 28 associated with the steering shaft 8.

The signals emanating from the sensors 25, 26, 27, 28 and 29 are, as stated, passed to the electronic unit 24 and are processed thereby in order, through a control line 30, to control the electric motor 23 according to the operative conditions recorded. In this way, it is possible automatically to control the friction clutch 7 and consequently the automatic regulation of the four-wheel drive in optimum fashion in order to guarantee the very best performance of the vehicle in any driving situation.

Naturally, the details of construction and these forms of embodiment may be widely varied in comparison with what has been described and illustrated, without thereby departing from the scope of the present invention.

## Claims

1. A vehicle with four-wheel drive, having a motor (1), a steering system (8), a first unit (4) for transmitting driving torque to the front wheels (2), and a second unit (6) for transmitting driving torque to the rear wheels (3) and connected to the first transmission unit (4) through a normally-engaged friction clutch (7), characterised in that operatively associated with the friction clutch (7) are operating means comprising an electric motor (23), sensor means (25, 26, 27, 28 and 29) associated with the engine (1), the steering system (8) and the input and output of the friction clutch (7), respectively, for detecting the operative conditions of the vehicle, and an electronic control unit (24) the input of which is connected to the sensor means (25, 26, 27, 28, 29) and the output (30) of which is connected to the electric motor (23) to control the activation thereof in one sense corresponding to the loading of the friction clutch (7) or in the opposite sense corresponding to the removal of the load from the friction clutch (7) in order, at the limit, to disengage the clutch and thus to cancel the drive to the rear wheels (3), as a function of the operative conditions recorded by the said sensor means (25, 26, 27, 28, 29).

2. A vehicle according to Claim 1, characterised in that the electric motor (23) effects the translatory movement in one direction or the other of a rod (22) which, through a rocker lever (20), operates a sliding sleeve (19) for engaging and disengaging the friction clutch (7).
